**Europäisches Patentamt**

(19) **European Patent Office**

**Office européen des brevets**

(11) Publication number: **0 050 158**
**B1**

(12) **EUROPEAN PATENT SPECIFICATION**

(45) Date of publication of patent specification: **24.09.86**

(51) Int. Cl.⁴: **H 01 B 13/00, H 01 B 11/00, H 02 G 15/20**

(21) Application number: **81900952.3**

(22) Date of filing: **14.04.81**

(86) International application number:
**PCT/JP81/00088**

(87) International publication number:
**WO 81/03085 29.10.81 Gazette 81/25**

(54) **METHOD OF MAKING A DAM FOR A COMMUNICATION CABLE.**

(30) Priority: **15.04.80 JP 49393/80**

(43) Date of publication of application:
**28.04.82 Bulletin 82/17**

(45) Publication of the grant of the patent:
**24.09.86 Bulletin 86/39**

(84) Designated Contracting States:
**DE GB SE**

(56) References cited:
**DE-B-1 956 497**
**FR-A-2 038 844**
**JP-B-47 045 789**
**JP-B-48 029 114**
**JP-B-50 000 425**
**US-A-3 955 043**

(73) Proprietor: **THE FURUKAWA ELECTRIC CO., LTD.**
**6-1, 2-chome, Marunouchi Chiyoda-ku**
**Tokyo (JP)**

(72) Inventor: **TAKAGI, Seiji**
**2, Tatsumidaihigashi 3-chome Ichihara-shi**
**Chiba 290 (JP)**

(74) Representative: **Diamond, Bryan Clive et al**
**Gee & Co. Chancery House Chancery Lane**
**London WC2A 1QU (GB)**

The file contains technical information
submitted after the application was filed and
not included in this specification

Courier Press, Leamington Spa, England.

## Description

To prevent moisture from spreading along a multi-conductor sheathed communications cable, such as a telephone cable, through a damaged part of the sheath, or to retain pressurized gas within a cable sheath so as to prevent moisture entry, it is customary to provide water- and gas-tight blocks on each side of a damaged part, or at intervals along the pressurized cable, respectively, or where one cable is connected to another.

Such a block is made by stripping the cable sheaths to expose the insulated conductors, covering the exposed conductors with a mold, and injecting therein polymer-forming components which are to form the block; it is known to use polyethylene, but this has the disadvantages of long time needed for the process, or to use an epoxy resin, but this generates much heat in the curing which can melt the insulators of the conductors.

It is often previously necessary to also use a dam stopper, e.g. of a putty or fibrous material, within the spaces between the conductors, to prevent excessive spread of the injected block-forming material, but this has to be done manually and is troublesome.

US—A—3,639,567 discloses a method of producing a gas-tight (and therefore water-tight) block inside a sheathed multiconductor cable on each side of an area where work is to be performed, by introducing into an aperture in the sheath of the cable a self-curing foaming polyurethane composition which comprises a polyisocyanate, an active hydrogen compound, a catalyst and water; the composition reacts to form polyurethane containing bubbles of carbon dioxide to expand the mixture to 5—25% of its original size. The composition has a "pot life", i.e. is mobile for 5—30 minutes after it is mixed. There is however a problem in that the polyurethane does not adhere well to polyethylene insulation of the cables.

US—A—3955043 discloses a method of splicing two pieces of a monoconductor high voltage cable using a urethane resin foamed with a chlorfluoroalkane ($CFCl_3$). There is no suggestion of applying this to a multi conductor communication cable.

In place of the carbon dioxide generated by reaction of the water with the polyisocyanate I use fluorochloroalkane as blowing agent.

According to the present invention, a method of producing a dam or block to prevent passage of moisture along the spaces between the conductors of a communication cable, comprises stripping the sheat from a portion of the cable so as to expose the insulated conductors, forming a mold around the exposed portions of the conductors, mixing a self-curing polyurethane resin composition comprising a polyisocyanate and an active-hydrogen-containing compound, injecting the mixture into the mold, closing the mold and allowing the resin components to react and to generate a gaseous blowing agent which is under pressure in the closed mold and which foams the resin and causes the resin as it cures to be spread into the spaces between the insulated conductors along a length of the cable, and removing the mold to leave the gas- and water-impermeable dam or block of cured resin within the cable, characterized in that the composition contains as blowing agent a fluorochloroalkane which is vaporised at the temperature of said reaction and that the resin composition components are selected so that the time from mixing of the composition until the composition is in a creamy state is 20 to 60 seconds, so that it travels for only a desired limited distance along the length of the cable.

Preferred features are that said period until the composition becomes creamy is 30 to 45 seconds; the resin composition flows for a distance of 20 to 80 millimetres along the length of the cable, which does not prevent the necessary flexibility of the cable, although the pressure length depends on the nature of the cable; and the rise-off time, from begining of foaming until completion of foaming, is 55 to 130 seconds.

The preferred fluorochloroalkane is trichloro-fluoromethane, $CCl_3F$, which is a liquefiable gas, boiling at $-23.7°C$. It is known to use fluorochloro-carbons as foaming agents to make closed-cell foams in electrically insulating molded polymers, but not for the present purpose of producing a dam between the conductors of a communication cable. Other usable fluorochloroalkanes are $CHClF_2$, $CCl_2F_2$ and $CCl_2FCCl_2F_2$.

The resin composition is liquid when it is injected into the mold but is foamed and cured (hardens) rapidly in the mold. The composition is usually made by mixing two parts, one comprising the isocyanate and the other containing the active hydrogen compound, e.g. one or more polyol, catalyst, and fluorochloroalkane. The reaction generates heat which makes the blowing agent gaseous and foams the composition so that it appears "creamy"; the delay between the mixing of the parts of the resin composition and the exhibiting of the creamy state which the mixture begins to be foamed by the heat of the reaction is known as the "cream time" and can be determined by eye through a suitable glass container. If the cream time were less than 20 seconds the foaming and curing rate is too high for the mixture to be adequately infiltrated between the conductors; and if it is more than 60 seconds then conversely the resin is intruded in a long length of the sheath and there is insufficient mixture in the mold and it is difficult to obtain adequate foaming pressure within the mold. The viscosity of the mixture increases as curing proceeds.

The selection of the aforesaid cream time ensures good adhesion of the polyurethane to the insulation of the conductors, because the mixture is cured at an appropriate time after it has become intruded between the conductors for an adequate foaming pressure to force the polymer against the insulators.

It is not necessary in the invention to use a dam stopper or "interference" at the sheath ends of the cable, but if necessary, e.g. with a cable made up of a plurality of insulated units twisted together, with a relatively large gap between the units, a thin rod which may have a cotton head or similar stopper may be inserted in the gap.

The invention provides a gas-tight dam rapidly without the need usually for a dam stopper and thus productivity is much improved.

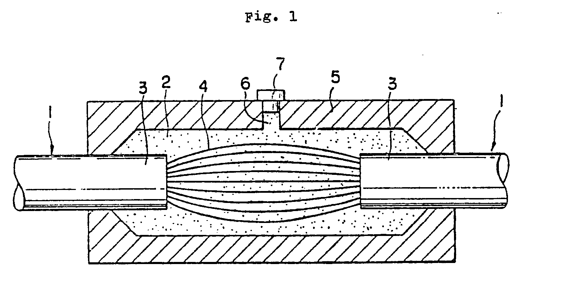

The invention will now be described with reference to the accompanying drawing, which is a cross-section of a dam of the invention in process of being produced.

The drawing shows a communication cable 1 from which a portion of the sheath 3 has been stripped so as to expose the transmission members or conductors 4; these are shown as having been untwisted, which is desirable to assist penetration of the polymer composition between there (if the cable has only a few conductors, untwisting is not needed). A mould 5 has been placed around the exposed conductors and the adjacent sheathed portions whereon the mold is tightly engaged; the mold is suitably made of metal and in two halves, in one of which is a central injections port 6. The polyurethane resin composition 2 has been injected through the port 6 to fill the space in the mould; a cap 7 has been replaced over the port and the composition is allowed to be foamed and cured and to penetrate each sheathed portion of the cable to form a block therein.

Subsequently the mold parts will be separated and removed, to leave the cable with the block formed.

## Claims

1. A method of producing a dam or block (2) to prevent passage of moisture along the spaces between the conductors (4) of a communication cable (1), which comprises stripping the sheath (3) from a portion of the cable so as to expose the insulated conductors, forming a mold (5) around the exposed portions of the conductors (4), mixing a self-curing polyurethane resin composition comprising a polyisocyanate and an active-hydrogen-containing compound, injecting the mixture into the mold, closing the mold and allowing the resin components to react and to generate a gaseous blowing agent which is under pressure in the closed mold and which foams the resin and causes the resin (2) as it cures to be spread into the spaces between the insulated conductors along a length of the cable, and removing the mold to leave the gas- and water-impermeable dam or block of cured resin within the cable, characterized in that the composition contains as blowing agent a fluorochloroalkane which is vaporised at the temperature of said reaction and that the resin composition components are selected so that the time from mixing of the composition until the composition is in a creamy state is 20 to 60 seconds, so that it travels for only a desired limited distance along the length of the cable (1).

2. A method as claimed in Claim 1, wherein said period until the composition becomes creamy is 30 to 45 seconds.

3. A method as claimed in Claim 1, 2 and 3, wherein the resin composition flows for a distance of 20 to 80 millimetres along the length of the cable.

4. A method as claimed in Claim 1, 2 or 3, wherein the rise-off-time, from beginning of foaming until completion of foaming, is 55 to 130 seconds.

5. A method as claimed in any preceding claim, wherein the mold is removed after 5 to 20 minutes after the injection of the mixture into the mold.

6. A method as claimed in any preceding claim, wherein the amount of the catalyst in the composition is selected so that the composition is in said creamy state for the 20 to 60 seconds.

## Patentansprüche

1. Verfahren zur Herstellung eines Verschlusses oder Blocks (2) zur Verhinderung des Feuchtigkeitsdurchtritts entlang den zwischen den Leitern (4) eines Verbindungskabels (1) vorherrschenden Hohlräumen, bei dem folgende Schritte durchgeführt werden; Entfernen der Schutzhülle (3) an einem Abschnitt des Kabels, um die isolierten Leiter freizulegen, Bildung einer Form (5) um die freigelegten Abschnitte der Leiter (4), Mischen einer selbsthärtenden Polyurethanharzmischung, welche ein Polyisocyanat und eine aktiv-wasserstoffhaltige Verbindung umfaßt, Injizieren der Mischung in die Form, Verschließen der Form und Gewährleistung der Reaktion der Harzbestandteile sowie Erzeugung eines gasförmigen blasenbildenden Mittels, welches sich unter Druck in der verschlossenen Form befindet, das Harz aufschäumt und eine Verteilung des Harzes (2) während des Aushärteprozesses in die Hohlräume zwischen den isolierten Leitern entlang der Länge des Kabels gewährleistet, Entfernung der Form, um den gas- und wasserundurchdringbaren Verschluß oder Block aus ausgehärtetem Harz innerhalb des Kabels freizugeben, dadurch gekennzeichnet, daß die Mischung ein Fluorochloralkan als blasenbildendes Mittel (Treibmittel) beinhaltet, welches bei der Temperatur dieser Reaktion in den dampfförmigen Zustand übergeht, und daß die Bestandteile der Harzmischung derart ausgewählt werden, daß die Zeit vom Mischen (Anmachen) der Mischung bis zu dem Zeitpunkt, an dem die Mischung einen cremigen Zustand aufweist, 20 bis 60 Sekunden beträgt, sodaß diese nur in einer gewünschten begrenzten Entfernung entlang der Länge des Kabels (1) sich ausbreitet.

2. Verfahren nach Anspruch 1, dadurch gekennzeichnet, daß die Zeitdauer, bis die Mischung in den cremigen Zustand übergeht, 30 bis 45 Sekunden beträgt.

3. Verfahren nach den Ansprüchen 1, 2 und 3, dadurch gekennzeichnet, daß die Harzmischung auf eine Entfernung von 20 bis 80 mn entlang der Kabellänge verläuft.

4. Verfahren nach den Ansprüchen 1, 2 oder 3, dadurch gekennzeichnet, daß die Anschwellzeit (rise-off-time) von Beginn des Schäumprozesses bis zu dessen Beendigung 55 bis 130 Sekunden beträgt.

5. Verfahren nach einem der voranstehenden Ansprüche, dadurch gekennzeichnet, daß die Form 5 bis 20 Minuten nach Injizierung der Mischung in die Form entfernt wird.

6. Verfahren nach einem der voranstehenden Ansprüche, dadurch gekennzeichnet, daß die Katalysatormenge in der Mischung derart ausgewählt wird, daß die Mischung in 20 bis 60 Sekunden sich in dem cremigen Zustand befindet.

**Revendications**

1. Procédé pour fabriquer un barrage ou un bloc (2) empêchant l'humidité de passer le long des espaces compris entre les conducteurs (4) d'un câble de communication (1), dans lequel on enlève la gaine (3) sur une portion du câble de façon à exposer les conducteurs isolés, on forme un moule (15) autour des portions exposées des conducteurs (4), on mélange une composition de résine polyuréthane auto-durcissante contenant un polyisocyanate et un composé contenant un hydrogène actif, on injecte le mélange dans le moule, on ferme le moule et on laisse réagir les composants de la résine en dégageant un agent gonflant gazeux, qui se trouve sous pression dans le moule, fait mousser la résine (2) et, alors qu'elle prend, la fait se répandre dans les espaces compris entre les conducteurs isolés sur une certaine longueur du câble, et on enlève le moule pour laisser à l'intérieur du câble le barrage ou bloc de résine durcie imperméable au gaz et à l'eau, caractérisé en ce que la composition contient, comme agent gonflant, un fluorochloralcane qui est vaporisé à la température de la réaction et en ce que les composants de la composition de résine sont choisis de telle sorte que le temps qui s'écoule depuis le mélange de la composition jusqu'au moment où la composition est à l'état crémeux est 20 à 60 secondes de sorte que la composition ne se déplace que sur la distance limitée désirée sur la longueur du câble.

2. Procédé selon la revendication 1, dans lequel la durée jusqu'à ce que la composition devienne crémeuse est 30 à 45 secondes.

3. Procédé selon la revendication 1 ou la revendication 2, dans lequel la composition de résine coule sur une distance de 20 à 80 millimètres sur la longueur du câble.

4. Procédé selon l'une des revendications 1 à 3, dans lequel le temps depuis le début du moussage jusqu'à la fin de celui-ci est 55 à 130 secondes.

5. Procédé selon l'une quelconque des revendications précédentes, dans lequel on enlève le moule 5 à 20 minutes après l'injection du mélange dans le moule.

6. Procédé selon l'une quelconque des revendications précédentes, dans lequel on choisit la quantité du catalyseur dans la composition de façon que celle-ci passe à l'état crémeux ח 20 à 60 secondes.

Fig. 1